# EUROPEAN PATENT SPECIFICATION

(11) **EP 2 818 340 B1**
(45) Date of publication and mention of the grant of the patent: **11.10.2017**
(21) Application number: 12824947.1
(22) Date of filing: 22.08.2012
(51) Int. Cl.: B60C 23/06, B60W 10/18

(54) **SAFETY DRIVING CONTROL AND RESCUE SYSTEM FOR WHEEL DIAMETER CHANGE AND HIGH-SPEED TIRE BURST**
SICHERHEITSFAHRSTEUERUNGS- UND RETTUNGSSYSTEM FÜR RADDURCHMESSERÄNDERUNGEN UND BEI HOCHGESCHWINDIGKEIT PLATZENDE REIFEN
SYSTÈME DE COMMANDE DE CONDUITE SÉCURISÉE ET DE SECOURS POUR UNE MODIFICATION DU DIAMÈTRE DE LA ROUE ET UN ÉCLATEMENT DU PNEU À HAUTE VITESSE

(30) Priority: 22.08.2011 CN 201110244556
(43) Date of publication of application: 31.12.2014
(73) Proprietor: Wang, Dehong, Anyang, Henan 455000 (CN)
(72) Inventor: WANG, Dehong, Anyang, Henan 455000 (CN); XIUTAI, Zhang, Anyang, Henan Province 45500 (CN); WENSHANG, Wang, Anyang, Henan Province 45500 (CN); CHUNFANG, Xing, Anyang, Henan Province 45500 (CN); JUNCHANG, Wang, Anyang, Henan Province 45500 (CN)
(74) Representative: DREISS Patentanwälte PartG mbB
(86) International application number: PCT/CN2012/080470
(87) International publication number: WO 2013/026396

(56) References cited:
- EP-A1- 0 968 892
- EP-A1- 1 428 692
- EP-A2- 1 388 440
- EP-A2- 1 449 684
- WO-A1-2006/122452
- CN-A- 101 716 873
- DE-C1- 10 140 615
- US-A- 5 721 528

## Description

The disclosure relates to a safety driving control and rescue system for wheel radius change and tire burst in high-speed.

At present, a safety driving auto-control technique represented by ABS, TCS and ESP has developed well and helps to work well and importantly for the safety and stable control in particular cases. However, a question relating to a driving safe control and rescue when effective rolling radius obviously changes during high speed driving lacks of effective research. There is hardly a safe and effective solution for the vehicle according to the wheel radius change.

For example, on a highway, if a front tire of a vehicle suddenly burst, the effective rolling radius of the tire will change considerably. At this time, the head of the vehicle will rapidly deflect toward the side with the burst tire. If huge inertia and direct of the vehicle can not be put right, the laterally rolling can happed very likely, thereby a serious traffic accident can be caused. Even though the vehicle is equipped with the most advanced ESP system this moment, it doesn't do much good for preventing harm of a serious accident caused by tire bursting.

Specifically, taking a conventional tire 195/70R 14 77H of a usual car for example, in which the section width of the tire is 195mm, the section height of the tire itself is 136.5mm, the radius of the hub is 355.6mm, the total radius is 492.1mm, the circumference of the tire is 3090.4mm. After the tire has burst during driving at a high speed, if the tire falls off, the total radius of the wheel is maximally reduced to 355.6mm of the hub radius from 492.1mm, that is, the rolling radius or the height from the hub to ground is decreased by up to a 27.74%, a linear speed converted by the same angular speed also will be decreased by 27.74%. It means that the rolling distance of the tire burst wheel is less than that of the tire non-burst wheel by 0.857m if they each rotate a circle. For a vehicle with a high speed of 108km/h, the theoretic linear speed of a wheel of the vehicle is 30m/s. If the tire of the right front wheel as a driving wheel has burst, the tire non-burst wheel with this specification theoretically will go forward 8.32m more than the tire burst wheel in an extreme condition of no operation to control direction. When the rolling resistance between the tire burst wheel and ground is greater than that between the tire non-burst wheel and ground, a differential mechanism will work to further enlarge the driving force of the tire non-burst wheel. The width of a usual vehicle road is about 3.5m, and the distance between two wheel axles of a vehicle is only less than 2m, therefore the tire non-burst wheel will drive more than the tire burst wheel by width of a lane or double axle distance in the moment of half second. Especially after a tire is torn, the burst tire will suffer from a huge rolling resistance, at this time, a differential mechanism will rapidly rotate a tire non-burst wheel, and the vehicle will then rotate around the tire burst wheel. Then the tire non-burst wheel will drive a distance of an axle more than the tire non-burst wheel within 0.3s, which will lead to a turn of 90 degrees or even 180 degrees of the vehicle head. The vehicle will laterally occupy the driving lane on the burst tire side, thereafter the huge going-forward inertia of the vehicle is enough to roll over or tail it within 0.5s, and a serious traffic accident will thereby be caused.

However, in the automotive industry at present, the problem of driving damages and safety and stability control caused by suddenly changing the rolling radius of a tire rarely gets attentions. A commonly adopted monitoring solution aiming at the high-speed burst is judging if the inside pressure of the tire is suddenly reduced to zero. The existing tire pressure monitoring system TPMS for car mainly has two manners, one of which is using angular speed sensor equipped by ABS. By the manner, the reducing of gas pressure will lead to decrease of the effective diameter of the tire, which thus will lead to abnormal increase of rotation speed of the tire. The other manner is a direct detecting manner with gas pressure sensor and temperature sensor mounted inside of a tire. The detecting precision of the direct manner is usually higher than that of the indirect manner.

In the direct manner, it is possible to detect the descending gas pressure by means of the difference between the rotation speeds of left and right tires using the wheel speed sensor of ABS. The advantage of the indirect manner is in that additional costs basically is not required if only mounting ABS, but the problem of the manner is that the detecting precision of gas pressure is lower than the direct manner, and the detecting can not be done when the gas pressures of all four tires are reduced.

In the direct manner of TPMS, the sensors and transmitter chips are mounted adjacent to a valve for tire, thus can timely alarm vehicle-mounted wireless receiver and provide information of tire burst when the pressure of the tire is too high, too low, or the tire is quickly or slowly leaking gas, or the temperature of the tire is changing abnormally. No matter when the vehicle is driving or in a resting state, the condition of the pressure of the tire (including spare tire) can be monitored at any time. But, TPMS can not complete automatic rescue and stability control of the vehicle after the tire bursts under the high speed, so that, the serious traffic accident, such as car crash and people died and pileup, caused by burst of the tire can not be avoided completely.

According to the tire pressure monitoring technology of the existing TPMS, the sampling frequency is low, such as one sampling needs about few seconds or even few minutes, so that the burst signals can not be obtained timely. If the tire pressure abnormal signals including burst are needed to be obtained timely, the sampling frequency must be higher, which will influent the life of the battery. Moreover, the manufacturing cost is high. For the sake of saving electricity or others, circuitry design will become complicate. Because tire pressure monitoring and emitting module usually is located at the mounting position of the valve, it is damaged easily when the tire is mounted or dismounted.

But the existing TPMS for detecting tire pressure or BMBS (burst monitoring and braking system), or BMBS and ESP system for controlling the vehicle in the dangerous condition, all can not measure and provide the tire radius change in the condition of seriously lacking of gas or burst. Therefore, the above systems can not perform more targeted, more timely and scientific and more effective driving control and rescue according to the real-time information of the effective rolling radius of respective wheel such as when the effective rolling radius of the vehicle driving at a high speed changes instantaneously obviously due to burst or any other.

As an example, the control logic of the highest level ESP driving stability control system equipped by a vehicle so far is based on the following hypothesis: the effective rolling radius of respective wheel is constant. But in fact, when determining if the rolling speed of some wheel changes, there exist two equally important detections, that is, one for detecting if the angular speed of rotation changes, the other for detecting if the dimension of the effective rolling radius changes. Only combining two detections, the driving condition of respective wheel can be determined accurately, and thus the vehicle can be controlled scientifically and effectively. If only the dimension of the angular speed of respective wheel and difference between them are monitored, and the dimension change of the present effective rolling radius of respective wheel are not detected, a serious deviation from the actual condition in which some tire seriously lacks of gas or suddenly bursts can appear, so that the ESP system can be leaded to provide a seriously wrong control countermeasure.

For example, at the instant of the left front tire burst, the laterally tilting force accumulative effect caused by suddenly increased rolling resistance of the burst tire due to lacking of gas is relatively small compared with the huge longitudinally going-forward inertia. At this time, the vehicle is still in the state of longitudinally stably going-forward under the inertia, and ESP also can not monitor that the vehicle has been up to the threshold of laterally slipping or rotating around the vertical axle but can firstly detect that the angular speed of the left front wheel is obviously momentarily increased by about 30%. At this moment, ESP may determine that the left front wheel has the tendency of slipping as a result of passing the road with one side of slippery surface, and thus may stop the left front wheel, so that the angular of the left front wheel may be identical with that of the right normal wheel. But the right front wheel will obtain greater driving force under the action of differential mechanism, and thus will rotate more distance with respect to the left burst wheel within the same time. In this way, as a result of the control of ESP, a sudden and huger leftwards deflecting force may be induced momentarily on the contrary, which thereby will lead to turning around or laterally rolling of the vehicle. At this time, ESP system can become confused in control logic, and further produce wrong countermeasures and then lead to a more serious accident.

Furthermore, some technologies aiming at high-speed burst accident has been present, but they cannot root out the danger of laterally tilting and laterally rolling of the vehicle with burst tire during driving at a high speed, don't consider the driving characteristics when the wheel radius changes, thus cannot rescue effectively aiming at burst. The prior public technologies also cannot root out the rear-end accident caused by tire burst during the actual driving. Aiming at potential risk arising from the vehicle driving at a high speed, there is existing a requirement for a more scientific and perfect rescue countermeasure and a safely driving control solution.

Control systems using wheel speed signals are known from DE 101 40 615 C1, according to the preamble of claim 1, and EP 0 968 892 A1. Another control system is known from EP 1 449 684 A2.

Therefore, aiming at a safe driving control and rescue problem of a vehicle when the effective rolling radius of a tire changes or a tire suddenly burst during driving at a high speed, the present invention provides an intelligent control system for rescue of high speed tire burst and for a safe driving when the wheel radius obviously changes, which can ensure that the vehicle with changed wheel radius drives safely and stably, and the damages to people and vehicle and serious traffic accident likely caused by a vehicle with burst tire at a high speed can be reduced and even to zero possibility.

The invention provides a safety driving control and rescue system for wheel radius change and tire burst in high-speed, including: a real-time monitoring module for detecting a rolling wheel radius and an angular speed of respective wheel; a signal transmitting module for transmitting detected signals of the rolling wheel radius and the angular speed of the real-time monitoring module; an analyzing and processing module for receiving the wheel radius signals and the angular speed signals from the signal transmitting module and analyzing and processing the signals to obtain a height change amount of effective wheel radius and an angular speed change amount; a central control device for determining whether respective wheel tire bursts or not according to the height change amount of the effective wheel radius of respective wheel transmitted by the analyzing and processing module; and a wheel braking control module, after the central control device determines a tire has burst, the central control device executes an emergency braking command and transmit the effective wheel radius signals and the real-time angular speed signals of respective wheel to the wheel braking control module, then the wheel braking control module can control a braking device to apply braking forces with different values and different acting times to respective wheel based on the state of the vehicle driving on linear road or curved road according to a difference between the effective wheel radius of the wheel with burst tire and the effective wheel radius of the wheel with non-burst tire, in order to control real-time driving speed of the respective wheel, thereby the vehicle can be maintained in the sate of it's original stable driving.

Preferably, in the state of a vehicle driving on linear road, the wheel braking control module can control the braking system of the respective wheel to output a braking force so as to adjust a ratio of the angular speed of the wheel with burst tire and the angular speed of the coaxial wheel with non-burst tire being inversely proportion to a ratio of the real-time effective rolling radii of the wheel with burst tire and the real-time effective rolling radii of the angular speed of the coaxial wheel with non-burst tire by mean of generating a braking force control signal for increasing braking force of the coaxial wheel with non-burst tire, , thereby both coaxial front wheels or both coaxial back wheels of the vehicle are controlled to reach or always maintain identical linear speeds; or in the sate of the vehicle driving on curved road, the wheel braking control module can adjust the difference between the angular speed of the wheel with burst tire and the angular speed of the coaxial wheel with non-burst tire to a difference between the linear speeds of both coaxial wheels according to the dimension and direction of the steering angular for satisfying the requirement for the steering angular of the vehicle when driving on curved road. Therefore, the difference between the linear speeds of the wheel with burst tire and the coaxial wheel with non-burst tire caused by the difference between their rolling radii, rolling resistances and tractions will be eliminated, thus the same linear speeds of both wheels are ensured when the vehicle is driving on linear road, or the difference between the linear speed of both wheels can satisfy the demand of driving on curved road. The situation of producing lateral force caused by the burst tire can be fundamentally avoided. As a result, the vehicle with burst tire can be completely in the state of a stable and safe driving.

Preferably, during the above control, the central control device can collectively control the wheel braking control module and the engine driving control module. A necessary braking force for the vehicle will be produced, while a driving traction force applied to the vehicle from the engine will be increased or reduced in order to secure that the vehicle may accelerate or decelerate, so that the vehicle can be operated to change roadway at a reasonable speed, in particular, a pileup accident caused by improper speed control during high speed tire burst can be avoided.

Preferably, the central control device determines the tire of the respective wheel has burst when the height change amount of effective wheel radius of the respective wheel △h is equal to maximal height change extent △hₘₐₓ of the effective wheel radius, wherein △ hₘₐₓ= Rₘₐₓ-Rₘᵢₙ, Rₘᵢₙ is the maximal effective rolling radius of the wheel predetermined when gas pressure is enough, and Rₘᵢₙ is the minimal effective rolling radius of the wheel predetermined when gas pressure is zero completely; the central control device determines the tire is in the sate of lacking of gas or seriously lacking of gas when △h is between 0 and △hₘₐₓ

Preferably, the real-time monitoring module for the rolling wheel radius of the wheel includes one or more height sensors which are fixedly mounted on respective wheel axle adjacent to respective wheel hub, the height sensors can measure the real-time height change amount from the hub to the ground from outside of the tire during the vehicle is driving; wherein the height sensors include measuring elements for measuring the height from the hub to the ground by means of ultrasonic, infrared or laser.

Preferably, the central control device determines that tire burst has occur when the height change amount of the effective radius of the tire is equal to the maximal height change amount Δhₘₐₓ of the effective wheel radius and the height change amount still maintains unchanged in the set time-delay distance during the vehicle driving. If △h is a fixed value in the range of 0∼△hₘₐₓ, the central control device determines the tire lacks of gas or seriously lacks of gas. If △h>△hₘₐₓ (refers to the condition in which the tire is completely flat and the hub also will become less, but above condition is not existent actually; generally refers to the condition in which the tire just right falls into a concavity or the road surface below the sensor is higher than the road surface below the tire) or △h<0 (refers to the condition in which the effective rolling radius of the tire increases, but above condition is also not existent actually; generally refers to the condition in which the tire jumps away from the ground), the central control device will determine that the road has abnormal concavo-convex surface. The data collected at this time will automatically disappear after the vehicle runs a distance, and will not be considered by the system.

Preferably, a laterally tilting amount sensor used as an assistant judging system can determine which tire has burst by detecting a tilting amount of tire burst vehicle toward a direction of a tire burst wheel. After a tire has burst, there will be a specific height reducing amount Δhₘₐₓ of the vehicle from the ground at the burst tire position. The specific height reducing amount Δhₘₐₓ will lead to a specific tilting angular θₘₐₓ of the vehicle toward the direction of the tire burst wheel. The horizontal plane of the chassis of the vehicle will maintain a stable tilt condition during the vehicle with burst tire is driving. The stable tilt condition can be detected by a set of the laterally tilting amount sensors mounted on the bottom of the vehicle and can be used for helping to judge whether which tire has burst or whether the rolling radius changes a specific amount.

Preferably, after the central control device determines a tire has burst and the vehicle continue to drive a distance, if the height change amount of the effective radius of the tire is not equal to the maximal height change amount Δhₘₐₓ, but is again back to its ordinary value, the central control device can determine that the vehicle has drove by a distance of abnormal protruding or depressed road surface and thus sends a command immediately releasing the burst tire rescue function.

Preferably, the real-time monitoring module for rolling wheel radius preferably uses a technical solution in which the effective rolling radius of the wheel can be detected from inside of the tire. Specifically, a detecting function integral module device is mounted on the hub inside of each tire. The integral module device at least includes a power supply module, sensors for detecting the height of inside of a crown and a wireless emission module. The detecting function integral module device may be mounted at a gas valve or a hub. By means of a real-time change amount of a distance between the crown and the hub detected when the detecting function integral module device is rotated to the lowest portion, a real-time change amount of effective rolling radius of the tire can be determined. The advantages of this detecting manner are in that it is not disturbed by the abnormal road surface, and the data can be processed easily and reliably. The crown height detecting module can be mounted on hub at multiple of situations for multiply improving the detecting rate of the wheel radius change. The sensors for detecting the height of inside of the crown can detect height change of the crown in wireless manner by means of ultrasonic, microwave, infrared ray or laser. The sensors for detecting the height of inside of the crown also can measure a specific reduced amount of crown height when the tire has burst or seriously lacks of gas in a manner of physically directly elastically contacting the crown by means of a contact electromagnetic switch, a proximity switch, a displacement detecting sensor, and thereby determines whether a tire has burst or seriously lacks of gas and obtains effective rolling radius corresponding to the present.

Preferably, according to the designed functions of the crown height change amount monitoring system, after the crown height has reduced to the maximum Δhₘₐₓ, when the burst tire is torn by the hub due to rolling for a long time, and then separates from the hub, that is, when the rolling radius corresponding to the monitored real-time signals is considerably more than the maximal value Rₘₐₓ when the tire pressure is normal, the system will determine the tire has fallen off, and use the radius of the metal hub as the present effective rolling radius to take corresponding measures.

Preferably, according to the designed function, the crown height change amount monitoring system will send tire burst signals and wheel radius signals only when the crown height has reduced to the maximal value △hₘₐₓ, in order to prolong the life of the internal battery.

Preferably, the detecting device for detecting the wheel radius change from inside of the tire may integrate with acceleration sensors, tire pressure sensors and tire temperature sensors, thus becomes an updated and upgraded produce VW-TPMS with multiple functions TPMS including wheel radius, tire temperature, tire pressure and saving electricity, so that the requirement for the stable control of a vehicle will be satisfied better and more scientifically.

Preferably, the system further includes a tire burst alarming module. The tire burst alarming module receives tire burst signals from the central control device, automatically starts alarming function to inside and outside of the vehicle, and maintains the alarming function until the alarming function is automatically removed after the vehicle safely stops or manually removed at the proper time. The alarming functions to inside include voice announcing, caution lights on the dashboard twinkling. The alarming functions to outside include lightening fog lights, lights on four corners, stoplight, high-beam and dipped light, whistling, or alarming with a special alarm, such as turning on lights on four corners and twinkling the direction indicator lamp on the side with emergency stop area.

Preferably, the system further includes a steering wheel angular measuring and stabilizing module. The steering wheel angular measuring and stabilizing module provides the dimension and direction information of the steering angular of the steering wheel to the central control device. The steering wheel angular measuring and stabilizing module will automatically immediately increase resistance of the steering wheels or completely lock the steering wheel for the vehicle equipped with an electric power steering after receiving the tire burst signals from the central control device. The steering wheel angular measuring and stabilizing module again properly reduces the resistance when detecting the driver actively steers, so that the vehicle can change road by slightly adjusting the direction.

Preferably, the system further is equipped with a rear vehicle rear-ending preventing module, which is signal communicated with the central control device. The rear vehicle rear-ending preventing module includes a distance detecting device for real-time detecting a distance between this vehicle and a closely following rear vehicle. When the central control device executes an emergency braking function for reducing the vehicle speed after tire burst, the distance detecting device transmits the distance signals real-time detected to the rear-ending preventing module. The rear-ending preventing module firstly compares the distance with a predetermined "braking released threshold". The rear-ending preventing module transmits vehicle emergent braking released signals to the central control device if the distance is less than the "braking released threshold". The central control device further sends decelerate released control command to the wheel braking module and the engine driving control module, so that the vehicle will maintain a safe distance from the rear vehicle unchanged. When the rear-ending preventing module detects that the distance between this vehicle and the rear vehicle is further being shortened quickly, it compares the distance with a predetermined "accelerate start threshold". The rear-ending preventing module outputs accelerate start signals to the central control device if the distance from the rear vehicle is equal to or less than the "accelerate start threshold". The central control device subsequently further outputs an accelerate command to the engine driving control module. As a result, the driving linear speeds of the both wheels on the axle with burst tire are maintained equally by the wheel braking control module or a requirement for linear speed of driving on curved road is satisfied, while the engine's driving force is increased and the speed of the vehicle is improved, thereby a safe distance from the rear vehicle is increased actively. When the distance between vehicles is increased up to the predetermined "braking released threshold", the central control device will automatically release the accelerate command. When the rear-ending preventing module detects that the distance between this vehicle and the rear vehicle is again increased to greater than the predetermined "braking released threshold" due to such reason as alarming or alert, the central control device will restart the emergency decelerate function to reduce the danger of the vehicle with burst tire driving at a high speed. So repeatedly, the speed of the vehicle with burst tire will be controlled until it is reduced to a predetermined "tire burst safe speed".

Preferably, when the central control device determines that a vehicle's tires do not burst but lack of gas, such as 0<△h<0.6△hₘₐₓ, the central control device will only activate the wheel braking control module, the tire burst alarming module, the steering wheel's angular measuring and stabilizing module and the engine driving control module according to the real-time angular speeds and the real-time change amount of the dimension of the effective wheel radius of left and right wheels on the respective axle and the dimension of the steering angular of the steering wheel, such that the angular speed of respective wheel is adjusted to satisfy the requirement for the dimension of real-time linear speed of coaxial left and right wheels when the vehicle is driving safely and stably. As a result, such phenomenon as laterally tilting, turning around, or tailing caused by the wheel radius change can be rooted out. If the phenomenon appears, the central control device will alarm to inside of the vehicle, then the driver can determine whether to decelerate or to stop to detect. When the tires are found to seriously lack of gas or tires explode suddenly, such as △h>0.6△hₘₐₓ, the central control device will send control demands to the wheel braking control module, the alarming module, the steering wheel's angular measuring and stabilizing module, the engine driving control module and the rear-ending preventing module, so that intelligent control and rescue function for safe driving is activated to intelligently reduce the speed to "tire burst safe speed" for avoiding rear-ending.

In order to real-time and accurately monitor whether tire burst occurs or the effective rolling wheel radius of the wheel changes when a vehicle is driving at high speed, the invention uses high enough monitoring and sampling frequency. As a result, if only a vehicle drives 0.1∼0.5 m, a update to effective rolling radius parameter of the wheel with burst tire can be completed, and one control for avoiding forming deflecting force and adjusting to the safe speed of the vehicle can be implemented.

### BRIEF DESCRIPTION OF THE DRAWINGS

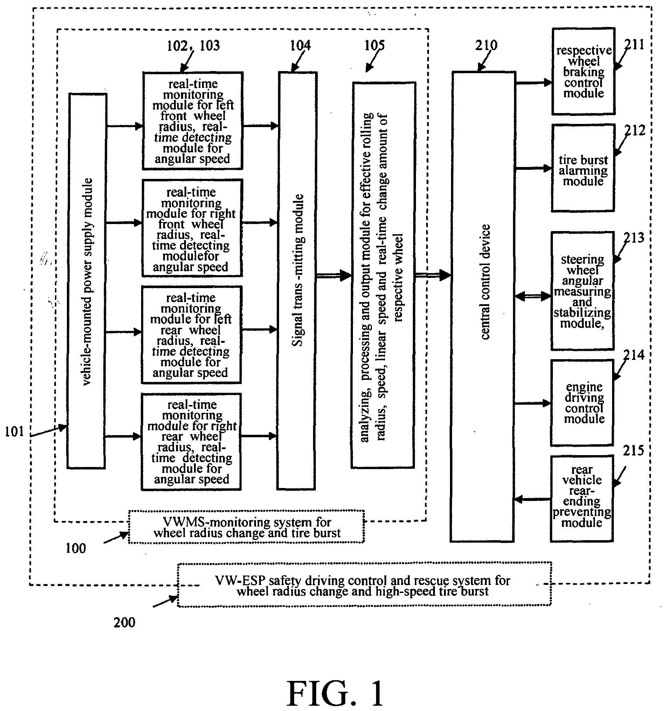

FIG.1 is a structural schematic diagram of "VW-ESP-a safety driving control and rescue system for wheel radius change and high-speed tire burst" including "VWMS-a monitoring apparatus for wheel radius change and tire burst" according to the invention.

### DETAILED DESCRIPTION OF THE PREFERRED EMBODIMENTS

### First embodiment

As shown in FIG.1, the present invention provides a monitoring apparatus 100 for wheel radius change and tire burst, the monitoring apparatus 100 includes a vehicle-mounted power supply module 101, a real-time monitoring module 102 for wheel radius change, a real-time detecting module 103 for wheel angular speed, a signal transmitting module 104 and an analyzing and processing module 105 for respective wheel's effective rolling radius, angular speed, linear speed and real-time change amount.

The real-time monitoring module 102 for wheel radius change includes height sensor(s) fixedly mounted on respective axle adjacent to respective hub. The height sensor(s) real-time measures the height from the hub to the ground or the height and the real-time change amount of a tire during the vehicle is driving, wherein the height sensor(s) is a measuring element for measuring the height from the hub to the ground or height change of the tire (here refer to a height change of effective wheel radius of respective wheel) by means of ultrasonic, infrared, laser or other direct or indirect method. A laterally tilting amount sensor as an assistant judging system can judge which tire has burst by detecting a tilting amount of the vehicle toward a direction of tire burst wheel. After a tire has burst, there will be a specific height reducing amount △hₘₐₓ of the vehicle at tire burst position from the ground, which will lead to a specific tilting angular θₘₐₓ of the vehicle toward the direction of the tire burst wheel and can be detected by a set of the laterally tilting amount sensors mounted on the bottom of the vehicle. The horizontal plane of the chassis of the vehicle will maintain a stable tilt condition during the vehicle with burst tire is driving. In this way it is possible to help to judge whether which tire has burst or whether the rolling radius produces particular change amount by monitoring the tilt condition.

The manner detecting a real time change amount of effective rolling radius of a tire has the following advantages: it is possible to achieve on-line continuous measurement without considering sampling frequency and service life limit of the built-in battery, and the apparatus and circuit are simple and reliable.

The signal transmitting module 104 transmits the real time angular speed signals of respective wheel and the real-time effective rolling radius signals of respective wheel and/or laterally tilting amount signals by means of wired harness.

The analyzing and processing module 105 analyzes and processes the real-time detected effective rolling radius signals and obtains a height change amount △h of the effective radius, that is, a change amount in height from the hub to the ground or a burst tire. In the embodiment as shown in FIG.1 according to the invention, the analyzing and processing module 105 is a single module. However, in the other embodiments, the analyzing and processing module also can be integrated into a central control system of a vehicle and then completed as a part thereof.

The monitoring apparatus 100 for wheel radius change and tire burst is comprised in the safety driving control and rescue system 200 for wheel radius change and tire burst in high-speed (VW-ESP) of the invention. The safety driving control and rescue system 200 includes a central control device 210. The height change signals of effective wheel radius of respective wheel and the real-time angular speed of respective wheel output from the analyzing and processing module 105 of the monitoring apparatus 100 for wheel radius change and tire burst are output to the central control device 210. The central control device 210 then judges whether burst has occurred during a high-speed driving according to the input height change signals of effective wheel radius of respective wheel or not, the judging process is as follows:
(1) The sensors of the monitoring module 103 adjacent to the hub real-time measure a height h from the hub to the ground, which together with a fixed distance h1 from the sensors themselves to the rolling center of the wheel axle can obtain a effective rolling radius R (R=h+h1) corresponding to the present. The value of the effective rolling radius R is between maximal rolling radius Rₘₐₓ previously measured when the gas pressure is high enough and minimal rolling radius Rₘᵢₙ previously measured when the gas pressure is completely zero, i.e. Rₘᵢₙ<R<Rₘₐₓ, thereby maximal change range △hₘₐₓ=Rₘₐₓ-Rₘᵢₙ in height of the effective wheel radius can be obtained;
(2) Judging whether the change amount △h in height h of the effective wheel radius approaches the maximal change range △hₘₐₓ previously measurable when the tire pressure is completely disappeared, by which whether the tire has burst or whether the tire pressure is very low will be determined;
(3) By means of a time-delay process, the collected fault signals will be filtrated, which can eliminate disturb of abnormal road surface, that is, a certain time-delay distance is set or a corresponding time-delay time based on the vehicle speed is set. When the collected change amount (reduced amount) in height of the effective wheel radius is equal with △hₘₐₓ, for example the change amount (reduced amount) in height still maintains unchanged in a predetermined time-delay distance (such as 1-3 meters) during the vehicle is driving, then it is determined that burst has occurred and intelligent rescue function will be put in practice; otherwise, if it is found that the height of the effective wheel radius comes back to its ordinary value according to the signal from the monitoring apparatus 100 for wheel radius change and tire burst after the predetermined time-delay distance has passed, the central control device 210 will judge the tire burst is not happened, so that the fault signals will be filtered. Wherein the fault signals are collected when a protrusion with a height of △hₘₐₓ is passing below the sensor by chance, or when the wheel is just passing a depressed road surface with a depressed depth △hₘₐₓ below the sensor;
(4) During the vehicle is driving, if the height reduced amount of the effective radius of the tire has come back to an ordinary value again after a distance, and it is not equal to the change amount △hₘₐₓ of tire burst feature, the central control device has a function for automatically eliminate disturbing of the fault signals resulted from the abnormal road surface and immediately releasing tire burst stopping rescue;
(5) After a condition in which the height of the effective wheel radius is equal to or greater than the feature change amount △hₘₐₓ has been monitored, for the vehicle with the function of tire pressure monitoring TPMS, the central control system will automatically activate the corresponding branch of TPMS, and inspect and verify. If an information in which the tire pressure is zero or seriously low is transmitted from the corresponding branch of TPMS, the central control device will automatically setup the function of tire burst intelligent rescue; if the tire pressure is normal, it is indicates that the vehicle has passed the depressed or protruding road surface, or the road surface with fallouts, so that the central control device will judge tire burst accident does not occur.

As shown in Fig.1, a safe driving control and rescue system for wheel radius change and high-speed tire burst (VM-ESP) 200 further includes a wheel braking control module 211, a tire burst alarming module 212, a steering wheel angular measuring and stabilizing module 213, an engine driving control module 214 and a rear vehicle rear-ending preventing module 215 connected to the central control device 210.

The central control device 210 can collectively control the wheel braking control module 211 and the engine driving control module 214, thereby produces a necessary braking force for the vehicle, at the same time increases or reduces the driving traction force applied to the vehicle from the engine, which can secure that the vehicle may not only automatically decelerate but also automatically accelerate, so that the vehicle can be operated to change road in a reasonable speed, in particular, a condition in which the vehicle's speed is controlled in an unscientific manner which leads to pileup with rear vehicles is avoided during high-speed tire burst rescue.

After the central control module 210 judges that certain tire burst has happened, it will send the information, which includes a command for executing urgent braking, and the effective wheel radius of the respective wheel and the real-time angular speed of the respective wheel and so on, to the wheel braking control module 211, The wheel braking control module 211 then applies braking forces with different level and different applying time to respective wheels according to a difference between the effective wheel radius of the burst tire and the effective wheel radius of the wheel with non-burst tire and the driving condition of the vehicle, so that the vehicle can maintain original stable driving condition during the vehicle is driving and a risk of out-of-control of the vehicle, for example including deflection of the driving direction of the vehicle, can be prevented. Here, the driving condition may be straight driving or driving on curved roads. In the straight driving condition, in order to make two coaxial front wheels and two coaxial rear wheels of the vehicle reach identical linear speeds, the wheel braking control module 211 adjusts the angular speeds of the burst tire and coaxial non-burst tire into being inversely proportional to their respective real-time effective rolling radius by increasing the braking force of the coaxial non-burst tire combining with controlling the engine driving control module 214 by the central control device 210. In the condition of the vehicle driving on curved road, the wheel braking control module 211 adjusts the difference between the angular speeds of the burst tire and the coaxial non-burst tire into a difference between the linear speeds of the two coaxial wheels according to dimension and direction of the steering angular and real-time effective rolling radii of both wheels, in order to meet demand of stable driving on curved roads.

According to the present invention, under the condition combining a dynamic difference between effective rolling radii of tire burst wheel and coaxial tire non-burst wheel, or in broad terms, a dynamic difference between effective rolling radii of coaxial left and right wheels of the vehicle, a control goal of present invention is to make the real-time driving linear speeds of burst tire wheel and coaxial non-burst tire wheel (or left and right wheels on the same axle) be identical, excluding a condition of a difference between linear speeds of both wheels meeting the requirement on steering in curved roads, by means of respectively adjusting and controlling the values of the braking forces applied to the two wheels, combined with adjusting and controlling functions including controlling the driving force of the engine and separately and/or collectively braking and driving other wheels, the wheel braking control module 211 automatically eliminates a difference between actually driving linear speeds of tire burst wheel and coaxial tire non-burst wheel, which are caused by differences between adhesive forces in every direction, rolling resistances, rolling radii, rolling angular speeds of both wheels after tire burst, and essentially eliminates a direction deflection force resulting from a difference between lateral forces occurring on the axle due to tire burst and disaster accidents thereby caused by out-of-control of the direction.

At the same time, the tire burst alarming module 212, after receiving tire burst signals or seriously lacking gas signals from the central control device 210, automatically starts alarming function to the vehicle, that is, alarming function to inside of the vehicle and to outside of the vehicle, and maintain the alarming function until be automatically reset after the vehicle safely stops or manually reset at the proper time. The alarming functions to inside of the vehicle include voice announcing, caution lights on the dashboard twinkling; the alarming functions to outside of the vehicle include lightening and flashing fog lights, lights on four corners, stoplight, high-beam and dipped light and whistling, or alarming with specific alarm, such as including activating lights on four corners and alternatively twinkling the direction indicator lamp on the side with emergency stop area. In this way the rear vehicle can be alarmed that the front vehicle is abnormal, thereby automatically decelerates or keeps away from it when the distance to the rear vehicle is too short or the speed of the vehicle is too high while the left and the right roads have been occupied.

Optionally, except for providing the value and direction of the present real-time steering angular to the central control device, the steering wheel angular measuring and stabilizing module 213 will automatically immediately increase resistance of the steering wheel or completely lock the steering wheel for the vehicle equipped with an electric power steering or an electric hydraulic steering after receiving the tire burst signals from the central control device 210. So that when the tire burst occurs, the driver is prevented from out-of-control to direction which is caused by instantly outburst huge deflecting force or tailing force due to the hubs rolling while touching the ground resulting from the burst tire wheel lacking of gas subsequently being rapidly rolled and torn, and so that the accidents are further avoided, and then the steering wheel angular measuring and stabilizing module 213 can properly reduce the resistance when detecting the driver intends to steer so that the vehicle can slightly adjust the direction to change road.

In the advantageous embodiment of the invention, the safety driving control and rescue system 200 for wheel radius change and high-speed tire burst (VW-ESP) further includes rear vehicle rear-ending preventing module 215 communicated with the central control device 210. The rear vehicle rear-ending preventing module 215 includes a distance detecting device for real-time detecting a distance between this vehicle and the rear vehicle closely following it. After detecting seriously lacking of gas or tire burst occurring, such as △h>0.6△hₘₐ, the distance detecting device transmits the distance signals real-time detected to the rear vehicle rear-ending preventing module 215. Then the rear vehicle rear-ending preventing module firstly compares the distance signals with a predetermined "braking released threshold", and transmits vehicle emergent braking released signals to the central control device 210 if the distance is less than the "braking released threshold". Then the central control device 210 transmits decelerate released control command to wheel braking module 211 and engine driving control module 214 in order to control the vehicle speed for maintaining a safe distance between this vehicle and the rear vehicle unchanged. When the rear vehicle rear-ending preventing module 215 detects that the distance between this vehicle and the rear vehicle is further shortening quickly, it compares the distance with a predetermined "accelerate start threshold" and outputs accelerate start signals to the central control device 210 if the distance to the rear vehicle is equal to or less than the "accelerate start threshold", then the central control device 210 further outputs an accelerate command to the engine driving control module 214, so that the engine's driving force is increased and the speed is improved while the driving linear speeds of the both wheels on the axle with burst tire are maintained equally by the braking control module 211, thereby a safe distance to the rear vehicle is increased actively; when the distance between vehicles is increased up to the predetermined "braking released threshold", the central control device 210 will automatically send commands to the engine driving control module 214 for actively releasing the accelerate function; when the rear vehicle rear-ending preventing module 215 detects that the distance between this vehicle and the rear vehicle again is increased to greater than the predetermined "braking released threshold" due to some reasons including reminding of the tire burst alarming module 212, the central control device 210 will restart the urgent decelerate function for reducing the risk of high-speed driving of the vehicle with burst tire; so repeatedly, until the vehicle with burst tire is controlled to drive at "tire burst safe speed" predetermined by the system.

Optionally, in the practical implemental solution, when a vehicle's tire(s) burst does not occur but gas obviously lacks in tires, such as 0<△h<0.6△hₘₐₓ, the central control device 210 will only start the wheel braking control module 211, the alarming module 212, the steering wheel angular measuring and stabilizing module 213 and the engine driving control module 214, and according to the real-time angular speeds and the real-time change amount of the value of the effective wheel radius of left and right wheels on the respective axle and the value and the direction of the steering angular of the steering wheel, controls the angular speed of respective wheel to meet with a control solution relating to the value of real-time linear speed of coaxial left and right wheels required by the safe and stable driving of the vehicle, ensures the safe and stable driving of the vehicle, so that a condition in which the vehicle laterally slips or tails turning around is avoided, when the above condition appears, the central control device 210 will provide the alarm to inside of the vehicle, then the driver can determine whether to decelerate or to stop to detect; when the tires are found to seriously lack of gas or tires explode suddenly, such as △h>0.6△hₘₐₓ, the central control device 210 of the system will send control demands to the wheel braking control module 211, the alarming module 212, the angular measuring and stabilizing module 213 of steering wheel, the engine driving control module 214 and the rear vehicle rear-ending preventing module 215 according to the above described solution based on the information of the real-time angular speed and the value of the effective wheel radius, so that intelligent control and rescue function is activated to intelligently reduce the speed to "tire burst safe speed" for avoiding impacted by the rear vehicle.

In order to real-time accurately detect whether tire burst occurs or how the effective radius of the wheel changes when a vehicle is driving at high speed, using the invention, due to high sampling frequency of monitoring the wheel radius, if only a vehicle drives 0.1∼0.5 m, a update to effective rolling radius parameter of the wheel can be completed, and a control for avoiding forming deflecting force and reducing the speed of the vehicle can be implemented.

### Second embodiment

As shown in FIG.1, the present invention provides a monitoring apparatus 100 for wheel radius change and tire burst, the monitoring apparatus 100 includes a vehicle-mounted power supply module 101, a real-time monitoring module 102 for wheel radius change, a real-time detecting module 103 for wheel angular speed, a signal transmitting module 104 and an analyzing and processing module 105 for respective wheel's effective rolling radius, angular speed, linear speed and real-time changing amount. In addition, the safety driving control and rescue system for wheel radius change and high-speed tire burst (VM-ESP) 200 of the present invention further includes a wheel braking control module 211, a tire burst alarming module 212, a steering wheel angular measuring and stabilizing module 213, an engine driving control module 214 and a rear vehicle rear-ending preventing module 215 connected to a central control device 210.

The difference between second embodiments of the invention and the above-mentioned first embodiment of FIG. 1 is only in the difference of the structure and detecting manner of the real-time monitoring module 102, and other structure and solution of the embodiment are the same as that of the first embodiment.

In other embodiments, the real-time monitoring module 102 of the monitoring apparatus 100 for wheel radius change and tire burst is optionally displaced with a detecting device for detecting the effective rolling radius of the wheel from inside of the wheel tire and corresponding technical solution.

Different from the manner of first embodiment in which the real-time value of effective rolling radius of the wheel tire is indirectly detecting from outside of the tire, the real-time monitoring module 102 of the second embodiment directly detects the reduced height of the tire crown in different lack-of-gas conditions from inside by means of a integral module device with real-time detecting function for wheel radius change mounted on the hub inside of each tire, thereby directly measures and determines the change of effective rolling radius of the tire. The advantages for the second embodiment are data being accurate, processing being simple, mounting being convenient, measurement being not disturbed by external muddy environment due to rain or snow and abnormal protruding and depressed road surface, and delay determining and filtering handle to the detected data after driving a distance being not required.

The real-time monitoring module 102 for wheel radius change at least includes a power supply module, sensors for detecting the height of inside of the crown and wireless emission module. The real-time monitoring module 102 is an integral module device that can be mounted at a gas valve or on the hub, by means of a real-time change amount of a distance between the detected crown and the wheel hub when the detect device is rotated to the lowest portion, a real-time change amount of effective rolling radius of the tire can be determined. The sensors for detecting the height of inside of the crown can be mounted on hub at multiple of situations for multiply improving the detecting rate of the wheel radius change. The sensors for detecting the height of inside of the crown can detect height change of the crown in wireless manner by means of electromagnetic wave signals such ultrasonic, infrared ray, laser and etc. The sensors for detecting the height of inside of the crown also can measure a reduced amount of crown height when the tire has burst or lacks of gas in such manner of physically directly elastically contacting to detect the specific displacement of the crown by means of a contact electromagnetic switch, a proximity switch, a displacement detecting sensor, and thereby determines whether tires have burst or lack of gas and obtains present corresponding effective rolling radius.

Preferably, after the tires have burst, if the vehicle cannot change the running lane or decelerate due to such a road condition of the road being occupied by the back and left and right vehicles, thereby the vehicle is forced to drive at high speed for a long time, the burst tires will be torn by the hub thereof due to being rolled for a long time, and then separate from the hub, at this time, the rolling radius corresponding to the real-time signals monitored by the real-time monitoring module 102 will be considerably greater than the maximal value Rmax when the tire pressure is normal. In this respect, the invention includes a function design with a crown height change amount monitoring system, in which a predetermined effective radius value of burst tire when the metal wheel hub rolls contacting the ground is automatically used as the present effective rolling radius to take corresponding measures.

In practically implementing, the real-time monitoring module 102 for wheel radius sends tire burst and wheel radius signals only when detecting the crown height has reduced to the maximal characteristic value △hₘₐₓ to delay the life of internal battery and reduce the produce cost, and improve reliability of the parts.

Besides, the real-time monitoring module 102 for wheel radius may integrate with sensors relating to acceleration, tire pressure and tire temperature, and thereby becomes an updated and upgraded produce VW-TPMS with multiple functions TPMS including wheel radius, tire temperature, tire pressure and saving electricity, so that the vehicle can be controlled with higher, more scientific driving stability.

Like the first embodiment, the rescue and safe driving control function to the vehicle with wheel radius change or burst tire at high speed includes the following four aspects: adjusting and controlling the driving speed of both coaxial wheels with wheel radius change or burst tire, controlling the stability of the steering wheel, the alarming function to outside and inside and controlling to decelerate to avoid rear-ended by the rear vehicle. Therefore, the vehicle with burst tire can drive safely and stably and can decelerate to reasonable driving speed, such that the driver can safely stop on emergency stop area to carry out such operation as changing spare tire, and such accident caused by out-of-control of vehicle resulting from high speed tire burst as lateral roll, turn around, tail and serious pileup is avoided.

## Claims

1. A safety driving control and rescue system for wheel radius change and tire burst in high-speed, including:
a real-time monitoring module for detecting a rolling wheel radius and an angular speed of respective wheel;
a signal transmitting module for transmitting detected signals of the rolling wheel radius and the angular speed of the real-time monitoring module;
an analyzing and processing module for receiving the wheel radius signals and the angular speed signals from the signal transmitting module and analyzing and processing the signals to obtain a height change amount of effective wheel radius and an angular speed change amount;
a central control device for determining whether respective wheel tire bursts or not according to the height change amount of the effective wheel radius of respective wheel transmitted by the analyzing and processing module; and
a wheel braking control module, after the central control device determines a tire has burst, the central control device executes an emergency braking command and transmit the effective wheel radius signals and the real-time angular speed signals of respective wheel to the wheel braking control module,
**characterized in that** the wheel braking control module can control a braking device to apply braking forces with different values and different acting times to respective wheel based on the state of the vehicle driving on linear road or curved road according to a difference between the effective wheel radius of the wheel with burst tire and the effective wheel radius of the wheel with non-burst tire, in order to control real-time driving speed of the respective wheel, thereby the vehicle can be maintained in the sate of it's original stable driving,
wherein, in the state of a vehicle driving on linear road, the wheel braking control module can control the braking system of the respective wheel to output a braking force so as to adjust a ratio of the angular speed of the wheel with burst tire and the angular speed of the coaxial wheel with non-burst tire being inversely proportion to a ratio of the real-time effective rolling radii of the wheel with burst tire and the real-time effective rolling radii of the angular speed of the coaxial wheel with non-burst tire by mean of generating a braking force control signal for increasing braking force of the coaxial wheel with non-burst tire, , thereby both coaxial front wheels or both coaxial back wheels of the vehicle are controlled to reach or always maintain identical linear speeds; or in the sate of the vehicle driving on curved road, the wheel braking control module can adjust the difference between the angular speed of the wheel with burst tire and the angular speed of the coaxial wheel with non-burst tire to a difference between the linear speeds of both coaxial wheels according to the dimension and direction of the steering angular for satisfying the requirement for the steering angular of the vehicle when driving on curved road.

2. The system according to claim 1, wherein, the central control device determines the tire of the respective wheel has burst when the height change amount of effective wheel radius of the respective wheel △h is equal to maximal height change extent △hₘₐₓ of the effective wheel radius, wherein △hₘₐₓ= Rₘₐₓ-Rₘᵢₙ, Rₘᵢₙ is the maximal effective rolling radius of the wheel predetermined when gas pressure is enough, and Rₘᵢₙ is the minimal effective rolling radius of the wheel predetermined when gas pressure is zero completely; the central control device determines the tire is in the sate of lacking of gas or seriously lacking of gas when △h is between 0 and △hₘₐₓ.

3. The system according to any one of claims 1 to 2, wherein the real-time monitoring module for the rolling wheel radius of the wheel includes one or more height sensors which are fixedly mounted on respective wheel axle adjacent to respective wheel hub, the height sensors can measure the real-time height change amount from the hub to the ground from outside of the tire during the vehicle is driving; wherein the height sensors include measuring elements for measuring the height from the hub to the ground by means of ultrasonic, infrared or laser.

4. The system according to any one of claims 1 to 3, wherein a laterally tilting amount sensor as an assistant judging system can determine which tire bursts by detecting a tilting amount of the vehicle toward a direction of tire burst wheel; after a tire has burst, there will be a specific height reducing amount △hₘₐₓ of the vehicle from the ground at the burst tire position, the specific height reducing amount △hₘₐₓ will lead to a specific tilting angular θₘₐₓ of the vehicle toward the direction of the tire burst wheel, the horizontal plane of the chassis of the vehicle will maintain a stable tilt condition during tire burst wheel driving, a set of the laterally tilting amount sensors mounted on the bottom of the vehicle can help to judge whether which tire has burst or whether the rolling radius has a particular change amount by monitoring the specific tilt condition.

5. The system according to any one of claims 1 to 4, wherein the central control device determines that tire has burst when the height change amount of the effective radius of the tire is equal to the maximal height change amount △hₘₐₓ of the effective radius and the height change amount still maintains unchanged after the vehicle has passed the predetermined time-delay distance, after the vehicle has passed a driving distance after the central control device determines tire burst, if the central control device detects that the height change amount of the effective radius of the tire is not the maximal height change amount △hₘₐₓ when the tire has burst, but is again back to its stable ordinary value, it can determine that there are disturbing fault signals produced due to local abnormal protruding or depressed road surface and immediately release the determination of tire burst.

6. The system according to any one of claims 1 to 3, wherein the real-time monitoring module for the rolling wheel radius of the wheel is form of detecting function integral module devices mounted on the hub inside of each tire, the detecting function integral module device at least includes a power supply module, sensors for detecting the height of inside of a crown and a wireless emission module; the detecting function integral module device can be mounted on a gas valve or a hub; a real-time change amount of effective rolling radius of the tire can be determined by means of a real-time change amount of a distance between the crown and the hub detected when the detecting function integral module device is rotated to the lowest portion; the sensors for detecting the height of inside of a crown can detect height change of the crown in wireless manner by means of ultrasonic, infrared ray or laser, or can measure a reduced amount of crown height when the tire has burst or seriously lacks of gas in the manner of physically directly elastically contacting the crown by means of a contact electromagnetic switch, a proximity switch or a displacement detecting sensor, and thereby determines whether tires have burst or seriously lack of gas and obtains effective rolling radii corresponding to the present; and the detecting function integral module device sends tire burst information and wheel radius signals to outside only when detecting the crown height is reduced to the maximal value △hₘₐₓ.

7. The system according to claims 6, wherein the detecting function integral module device for detecting the effective rolling radius of the wheel from inside of the tire can integrate with acceleration sensors, tire pressure sensors and tire temperature sensors.

8. The system according to claims 6, wherein after the crown height is reduced to the lowest value, when the burst tire is torn by the hub due to rolling for a long time and then separates from the hub, the rolling radius corresponding to the real-time signals will be considerably less than the maximal value Rₘₐₓ determined when the tire pressure is normal, the detecting function integral module device uses an effective radius of a metal hub measured when it rolls directly contacting the ground as the present effective rolling radius.

9. The system according to any one of claims 1 to 8, wherein further includes a tire burst alarming module, the tire burst alarming module receives tire burst signals from the central control device, automatically activates alarming function to inside and outside of the vehicle, and maintains the alarming function until the alarming function is automatically removed after the vehicle safely stops or manually removed at the proper time; the alarming functions to inside include voice announcing, caution lights on the dashboard twinkling; the alarming functions to outside include lightening fog lights, lights on four corners, stoplight, high-beam and dipped light, whistling, or alarming with specific alarm, such as turning on lights on four corners and twinkling the direction indicator lamp on the side with emergency stop area.

10. The system according to any one of claims 1 to 9, wherein further includes a steering wheel angular measuring and stabilizing module, the steering wheel angular measuring and stabilizing module provides the real-time value and direction data of the steering angular of the steering wheel to the central control device, at the same time, the steering wheel angular measuring and stabilizing module will automatically immediately increase resistance of the steering wheels or completely lock the steering wheel for the vehicle equipped with an electric power steering or an electric hydraulic steering after receiving the tire burst signals from the central control device; and then the steering wheel angular measuring and stabilizing module can properly reduce the resistance when detecting the driver intends to steer so that the vehicle can change a roadway by slightly adjusting the direction .

11. The system according to any one of claims 1 to 10, wherein further includes a rear vehicle rear-ending preventing module, which is signal communicated with the central control device, the rear vehicle rear-ending preventing module includes a distance detecting device for real-time detecting a distance between this vehicle and a closely following rear vehicle; when the system determines the tire of the vehicle seriously lacks of gas or has burst, the distance detecting device transmits the real-time detected distance signals to the rear vehicle rear-ending preventing module, the rear vehicle rear-ending preventing module firstly compares the distance with a predetermined braking released threshold, and then transmits vehicle emergency braking released signals to the central control device when the distance is less than the braking released threshold, the central control device subsequently outputs braking released signals to the braking control module and the engine driving control module, for controlling the vehicle speed and keeping a safe distance between this vehicle and the rear vehicle unchanged; when the rear vehicle rear-ending preventing module detects that the distance between this vehicle and the rear vehicle is further shortening quickly, it compares the distance with a predetermined accelerate start threshold, and then outputs accelerate start signals to the central control device if the distance is equal to or less than the accelerate start threshold, the central control device subsequently further outputs an accelerate executing command to the engine driving control module, so that the engine's driving force is increased and the speed is thus increased while the driving linear speeds of the both wheels on the axle with burst tire are maintained in equal by the braking control module or the speed difference meets with a requirement for the vehicle being driving on curved road, thereby a safe distance to the rear vehicle is increased actively; when the distance between vehicles is increased up to the predetermined braking released threshold, the central control device will automatically send a command of automatically releasing accelerate to the engine driving control module; when the rear vehicle rear-ending preventing module detects that the distance between this vehicle and the rear vehicle is again increased to greater than the predetermined braking released threshold, the central control device will resend the emergency decelerate command to the braking control module for controlling the speed of the vehicle with burst tire until it is reduced to a predetermined tire burst safe driving speed.

12. The system according to any one of claims 1 to 11, wherein the central control device can collectively control the wheel braking control module and the engine driving control module, so that the respective wheel of the vehicle can be braked, then the angular speed of respective wheel can be adjusted, at the same time, output power applied to the vehicle from the engine can be increased or reduced, thereby the vehicle can accelerate or decelerate.

13. The system according to any one of claims 1 to 12, wherein when the central control device determines that a vehicle's tires lack of gas, such as the height change amount △h of the effective wheel radius satisfies the following condition: 0<△h<0.6△hₘₐₓ, the central control device is set such that according to the real-time angular speeds and the real-time change amount of the dimension of the effective wheel radius of left and right wheels on the respective axle and the value and the direction of the steering angular of the steering wheel, the angular speed of respective wheel is real-time adjusted to make the value of linear speed of coaxial left and right wheels meet the requirement of safe and stable driving of the vehicle driving on linear road or curved road, and the tire burst alarming module will be activated to execute alarming to inside and outside.

14. The system according to any one of claims 1 to 13, wherein the sampling frequency of the monitoring module can complete a update to effective rolling radius parameter of a wheel as long as the vehicle runs 0.1∼0.5 m.

## Patentansprüche

1. Kontroll- und Rettungssystem für sicheres Fahren bei einer Laufradradiusänderung und einem Reifenplatzer bei hoher Geschwindigkeit, das Folgendes umfasst:
ein Echtzeit-Überwachungsmodul zum Detektieren eines Radius eines rollenden Laufrades und einer Winkelgeschwindigkeit des entsprechenden Laufrades;
ein Signalübertragungsmodul zum Übertragen detektierter Signale des Radius des rollenden Laufrades und der Winkelgeschwindigkeit des Echtzeit-Überwachungsmoduls;
ein Analyse- und Verarbeitungsmodul zum Empfangen der Laufradradius-Signale und der Winkelgeschwindigkeitssignale von dem Signalübertragungsmodul und zum Analysieren und Verarbeiten der Signale, um einen Höhenänderungsbetrag des effektiven Laufradradius- und Winkelgeschwindigkeits-Änderungsbetrags zu erhalten;
eine zentrale Steuervorrichtung zum Bestimmen jeweiliger Laufrad-Reifenplatzer in Übereinstimmung mit dem Höhenänderungsbetrag des effektiven Laufradradius des jeweiligen Laufrades, der durch das Analyse- und Verarbeitungsmodul übertragen wird; und
ein Laufradbrems-Steuermodul, wobei die zentrale Steuervorrichtung, nachdem sie bestimmt hat, dass ein Reifen geplatzt ist, einen Notbremsbefehl ausführt und die Signale des effektiven Laufradradius und die Signale der Echtzeit-Winkelgeschwindigkeit des jeweiligen Laufrades an das Laufradbrems-Steuermodul überträgt,
**dadurch gekennzeichnet, dass** das Laufradbrems-Steuermodul eine Bremsvorrichtung steuern kann, damit sie anhand des Zustands des Fahrzeugs, das auf einer geraden oder gekrümmten Straße fährt, Bremskräfte mit unterschiedlichen Werten und unterschiedlichen Wirkzeiten entsprechend einer Differenz zwischen dem effektiven Laufradradius des Laufrades mit dem geplatzten Reifen und dem effektiven Laufradradius des Laufrades ohne geplatzten Reifen auf ein jeweiliges Laufrad ausübt, um eine Echtzeit-Fahrgeschwindigkeit des jeweiligen Laufrades zu steuern, damit das Fahrzeug im Zustand seines ursprünglichen stabilen Fahrens gehalten werden kann,
wobei in dem Zustand, in dem das Fahrzeug auf einer geradlinigen Straße fährt, das Laufradbrems-Steuermodul das Bremssystem des jeweiligen Rades steuern kann, damit es eine Bremskraft ausgibt, um ein Verhältnis der Winkelgeschwindigkeit des Laufrades mit geplatztem Reifen zu der Winkelgeschwindigkeit des koaxialen Laufrades ohne geplatzten Reifen umgekehrt proportional zu einem Verhältnis der effektiven Echtzeit-Rollradien des Laufrades mit geplatztem Reifen zu den effektiven Echtzeit-Rollradien des koaxialen Laufrades ohne geplatzten Reifen durch Erzeugen eines Bremskraft-Steuersignals zum Erhöhen der Bremskraft des koaxialen Laufrades ohne geplatzten Reifen einzustellen, wodurch beide koaxialen vorderen Laufräder oder beide koaxialen hinteren Laufräder des Fahrzeugs gesteuert werden, um gleiche Lineargeschwindigkeiten zu erreichen oder ständig aufrechtzuerhalten; oder wobei in dem Zustand, in dem das Fahrzeug auf einer gekrümmten Straße fährt, das Laufradbrems-Steuermodul die Differenz zwischen der Winkelgeschwindigkeit des Laufrades mit geplatztem Reifen und der Winkelgeschwindigkeit des koaxialen Laufrades ohne geplatzten Reifen auf eine Differenz zwischen den linearen Geschwindigkeiten der beiden koaxialen Laufräder in Übereinstimmung mit dem Ausmaß und der Richtung des Lenkwinkels einstellen kann, um die Anforderung des Lenkwinkels des Fahrzeugs zu erfüllen, wenn das Fahrzeug auf einer gekrümmten Straße fährt.

2. System nach Anspruch 1, wobei die zentrale Steuervorrichtung bestimmt, dass der Reifen des jeweiligen Laufrades geplatzt ist, wenn der Höhenänderungsbetrag Δh des effektiven Laufradradius des jeweiligen Laufrades gleich dem maximalen Höhenänderungsbetrag Δhₘₐₓ des effektiven Laufradradius ist, wobei Δhₘₐₓ = Rₘₐₓ-Rₘᵢₙ, wobei Rₘₐₓ der maximale effektive Rollradius des vorgegebenen Laufrades ist, wenn der Gasdruck ausreichend ist, und wobei Rₘᵢₙ der minimale effektive Rollradius des vorgegebenen Laufrades ist, wenn der Gasdruck null ist; wobei die zentrale Steuervorrichtung bestimmt, dass der Reifen im Zustand ohne Gas ist oder einen ernsthaften Gasverlust zeigt, wenn Δh im Bereich von 0 bis Δhₘₐₓ liegt.

3. System nach einem der Ansprüche 1 bis 2, wobei das Echtzeit-Überwachungsmodul für den Radius des rollenden Laufrades einen oder mehrere Höhensensoren umfasst, die an der jeweiligen Laufradachse in der Nähe der jeweiligen Laufradnabe fest montiert sind, wobei die Höhensensoren den Echtzeit-Höhenänderungsbetrag von der Nabe zum Boden von außerhalb des Reifens messen können, während das Fahrzeug fährt; wobei die Höhensensoren Messelemente zum Messen der Höhe von der Nabe zum Boden mittels Ultraschall, Infrarotlicht oder Laserlicht messen können.

4. System nach einem der Ansprüche 1 bis 3, wobei ein Sensor für den seitlichen Neigungsbetrag als ein unterstützendes Beurteilungssystem bestimmen kann, welcher Reifen platzt, indem er einen Neigungsbetrag des Fahrzeugs in Richtung des Laufrades mit geplatztem Reifen detektiert; wobei nach dem Platzen eines Reifens ein bestimmter Höhenänderungsbetrag Δhₘₐₓ des Fahrzeugs vom Boden an der Position des geplatzten Reifens vorhanden ist, wobei der bestimmte Höhenänderungsbetrag Δhₘₐₓ zu einem bestimmten Neigungswinkel θₘₐₓ des Fahrzeugs in Richtung des Laufrades des geplatzten Reifens führt, wobei die horizontale Ebene des Chassis des Fahrzeugs einen stabilen Neigungszustand während der Fahrt mit geplatzten Reifen aufrechterhält, wobei eine Gruppe von Sensoren für den seitlichen Neigungsbetrag, die an der Unterseite des Fahrzeugs montiert sind, dazu beitragen können, zu beurteilen, welcher Reifen geplatzt ist oder welcher Rollradius einen bestimmten Änderungsbetrag besitzt, indem der bestimmte Neigungszustand überwacht wird.

5. System nach einem der Ansprüche 1 bis 4, wobei die zentrale Steuervorrichtung bestimmt, dass ein Reifen geplatzt ist, wenn der Höhenänderungsbetrag des effektiven Radius des Reifens gleich dem maximalen Höhenänderungsbetrag Δhₘₐₓ des effektiven Radius ist und der Höhenänderungsbetrag weiterhin unverändert bleibt, wenn das Fahrzeug die vorgegebene Zeitverzögerungsstrecke durchfahren hat, nachdem das Fahrzeug eine Fahrstrecke durchfahren hat, nachdem die zentrale Steuervorrichtung den Reifenplatzer festgestellt hat, wobei die zentrale Steuervorrichtung, falls sie detektiert, dass der größte Minderungsbetrag des effektiven Radius des Reifens nicht der maximale Höhenänderungsbetrag Δhₘₐₓ ist, wenn der Reifen geplatzt ist, sondern wieder seinen stabilen normalen Wert hat, bestimmen kann, dass Fehlersignale aufgetreten sind, die durch eine räumlich begrenzte anomale Erhebung oder Vertiefung der Straßenoberfläche bedingt ist, und die Bestimmung des Reifenplatzers sofort zurücknehmen kann.

6. System nach einem der Ansprüche 1 bis 3, wobei das Echtzeit-Überwachungsmodul für den Radius des rollenden Laufrades die Form integrierter Modulvorrichtungen mit Detektionsfunktion hat, die an der Nabeninnenseite jedes Reifens montiert sind, wobei die integrierte Modulvorrichtung mit Detektionsfunktion wenigstens ein Leistungsversorgungsmodul, Sensoren zum Detektieren der Höhe der Innenseite einer Reifenlauffläche und ein Modul zum drahtlosen Senden umfasst; wobei die integrierte Modulvorrichtung mit Detektionsfunktion an einem Gasventil oder einer Nabe montiert sein kann; wobei ein Echtzeit-Änderungsbetrag des effektiven Rollradius des Reifens mittels eines Echtzeit-Änderungsbetrags einer Strecke zwischen der Reifenlauffläche und der Nabe, die detektiert wird, wenn die integrierte Modulvorrichtung mit Detektionsfunktion in den niedrigsten Bereich gedreht worden ist, bestimmt werden kann; wobei die Sensoren zum Detektieren der Höhe der Innenseite einer Reifenlauffläche eine Höhenänderung der Reifenlauffläche drahtlos mittels Ultraschall, Infrarotstrahlung oder Laserlicht detektieren können oder einen verkleinerten Betrag der Reifenlaufflächenhöhe messen können, wenn der Reifen geplatzt ist oder einen ernsthaften Gasverlust zeigt, indem die Reifenlauffläche mittels eines elektromagnetischen Kontaktschalters, eines Näherungsschalters oder eines Verlagerungsdetektionssensors physikalisch direkt elastisch kontaktiert wird, wodurch bestimmt wird, ob ein Reifen geplatzt ist oder einen ernsthaften Gasverlust zeigt, und effektive Rollradien, die dem aktuellen Zustand entsprechen, erhalten werden; und die integrierte Modulvorrichtung mit Detektionsfunktion Informationen über einen Reifenplatzer und Laufradradiusänderungssignale nach außen nur dann sendet, wenn sie detektiert, dass die Reifenlaufflächenhöhe auf den Maximalwert Δhₘₐₓ abgenommen hat.

7. System nach Anspruch 6, wobei die integrierte Modulvorrichtung mit Detektionsfunktion zum Detektieren des effektiven Rollradius des Laufrades von innerhalb des Reifens Beschleunigungssensoren, Reifendrucksensoren und Reifentemperatursensoren enthalten kann.

8. System nach Anspruch 6, wobei dann, wenn die Reifenlaufflächenhöhe auf den niedrigsten Wert verringert ist, wenn der geplatzte Reifen durch die Nabe zerrissen worden ist, weil er während einer langen Zeit gerollt ist, und sich dann von der Nabe trennt, der Rollradius, der den Echtzeitsignalen entspricht, erheblich kleiner als der Maximalwert Rₘₐₓ ist, der bestimmt wird, wenn der Reifendruck normal ist, wobei die integrierte Modulvorrichtung mit Detektionsfunktion einen effektiven Radius einer Metallnabe, der gemessen wird, wenn sie in direktem Kontakt mit dem Boden rollt, als den aktuellen effektiven Rollradius verwendet.

9. System nach einem der Ansprüche 1 bis 8, das ferner ein Reifenplatzer-Alarmmodul umfasst, wobei das Reifenplatzer-Alarmmodul Reifenplatzersignale von der zentralen Steuervorrichtung empfängt, eine Alarmfunktion innerhalb und außerhalb des Fahrzeugs automatisch aktiviert und die Alarmfunktion aufrechterhält, bis die Alarmfunktion automatisch beendet wird, nachdem das Fahrzeug sicher angehalten hat, oder manuell zu einer geeigneten Zeit beendet wird; wobei die Alarmfunktion nach innen eine Sprachmeldung und blinkende Warnlichter am Armaturenbrett umfasst; wobei die Alarmfunktionen nach außen das Einschalten der Nebelscheinwerfer, der Lichter an den vier Ecken, des Bremslichts, des Fernlichts und des Abblendlichts, ein Pfeifen, ein Alarmieren mit einem bestimmten Alarm, etwa das Einschalten der Lichter an den vier Ecken und das Blinken der seitlichen Richtungsanzeiger als Warnblinker umfassen.

10. System nach einem der Ansprüche 1 bis 9, das ferner ein Lenkwinkelmess- und Stabilisierungsmodul umfasst, wobei das Lenkwinkelmess- und Stabilisierungsmodul den Echtzeitwert und Richtungsdaten des Lenkwinkels des Lenkrades für die zentrale Steuervorrichtung bereitstellt und gleichzeitig den Widerstand des Lenkrades automatisch sofort erhöht oder das Lenkrad für das Fahrzeug, das mit einer elektrischen Servolenkung oder einer hydraulischen Servolenkung ausgerüstet ist, vollständig blockiert, nachdem sie von der zentralen Steuervorrichtung Reifenplatzersignale empfangen hat; woraufhin das Lenkwinkelmess- und Stabilisierungsmodul den Widerstand geeignet verringern kann, wenn detektiert wird, dass der Fahrer zu lenken beabsichtigt, so dass das Fahrzeug eine Fahrspur durch leichtes Einstellen der Richtung wechseln kann.

11. System nach einem der Ansprüche 1 bis 10, das ferner ein Auffahrverhinderungsmodul an der Fahrzeugrückseite umfasst, das mit der zentralen Steuervorrichtung in Signalkommunikation steht, wobei das Auffahrverhinderungsmodul an der Fahrzeugrückseite eine Abstandsdetektionsvorrichtung zum Erfassen in Echtzeit des Abstands zwischen diesem Fahrzeug und einem nah folgenden hinteren Fahrzeug umfasst; wobei dann, wenn das System bestimmt, dass der Reifen des Fahrzeugs einen ernsthaften Gasverlust zeigt oder geplatzt ist, die Abstandsdetektionsvorrichtung die in Echtzeit detektiert Abstandssignale zu dem Auffahrverhinderungsmodul an der Fahrzeugrückseite überträgt, wobei das Auffahrverhinderungsmodul an der Fahrzeugrückseite zunächst den Abstand mit einem vorgegebenen Bremsauslöseschwellenwert vergleicht und dann Fahrzeugnotbremsungs-Aufhebungssignale an die zentrale Steuervorrichtung überträgt, wenn der Abstand geringer als der Bremsauslöseschwellenwert ist, wobei die zentrale Steuervorrichtung anschließend Bremsaufhebungssignale an das Bremssteuermodul und das Kraftmaschinenantrieb-Steuermodul ausgibt, um die Fahrzeuggeschwindigkeit zu steuern und um einen sicheren Abstand zwischen diesem Fahrzeug und dem hinteren Fahrzeug unverändert zu halten; wobei das Auffahrverhinderungsmodul an der Fahrzeugrückseite dann, wenn es detektiert, dass der Abstand zwischen diesem Fahrzeug und dem hinteren Fahrzeug sich weiterhin schnell verringert, den Abstand mit einem vorgegebenen Beschleunigungsbeginn-Schwellenwert vergleicht und dann Beschleunigungsbeginn-Signale an die zentrale Steuervorrichtung ausgibt, falls der Abstand gleich oder kleiner als der Beschleunigungsbeginn-Schwellenwert ist, wobei die zentrale Steuervorrichtung anschließend ferner einen Beschleunigungsausführungsbefehl an das Kraftmaschinenantrieb-Steuermodul ausgibt, so dass die Antriebskraft der Kraftmaschine erhöht wird und somit die Geschwindigkeit erhöht wird, während die linearen Antriebsgeschwindigkeiten beider Laufräder auf der Achse mit dem geplatzten Reifen durch das Bremssteuermodul gleich gehalten werden, oder dann, wenn die Geschwindigkeitsdifferenz eine Anforderung dafür erfüllt, dass das Fahrzeug auf einer gekrümmten Straße fährt, ein sicherer Abstand zu dem hinteren Fahrzeug aktiv erhöht wird; wobei dann, wenn der Abstand zwischen Fahrzeugen bis zu dem vorgegebenen Bremsaufhebungsschwellenwert erhöht ist, die zentrale Steuervorrichtung automatisch einen Befehl zum automatischen Beenden der Beschleunigung an das Kraftmaschinenantrieb-Steuermodul sendet; wobei dann, wenn das Auffahrverhinderungsmodul an der Fahrzeugrückseite detektiert, dass der Abstand zwischen diesem Fahrzeug und dem hinteren Fahrzeug erneut auf einen Wert größer als der vorgegebene Bremsaufhebungsschwellenwert zunimmt, die zentrale Steuervorrichtung den Notbremsbefehl erneut zu dem Presssteuermodul sendet, um die Geschwindigkeit des Fahrzeugs mit geplatztem Reifen zu steuern, bis sie auf eine vorgegebene sichere Fahrgeschwindigkeit bei geplatztem Reifen verringert ist.

12. System nach einem der Ansprüche 1 bis 11, wobei die zentrale Steuervorrichtung das Laufradbrems-Steuermodul und das Kraftmaschinenantrieb-Steuermodul gemeinsam steuern kann, so dass das jeweilige Laufrad des Fahrzeugs gebremst werden kann, worauf hin die Winkelgeschwindigkeit des jeweiligen Rades eingestellt werden kann und gleichzeitig die Ausgangsleistung von der Kraftmaschine, die auf das Fahrzeug angewendet wird, erhöht oder verringert werden kann, wodurch das Fahrzeug beschleunigen oder verzögern kann.

13. System nach einem der Ansprüche 1 bis 12, wobei dann, wenn die zentrale Steuervorrichtung bestimmt, dass ein Fahrzeugreifen einen Gasverlust zeigt, etwa wenn der Höhenänderungsbetrag Δh des effektiven Laufradradius die folgende Bedingung erfüllt: 0 < Δh < 0,6 Δhₘₐₓ, die zentrale Steuervorrichtung so eingestellt ist, dass in Übereinstimmung mit den Echtzeit-Winkelgeschwindigkeiten und dem Echtzeit-Änderungsbetrag der Höhe des effektiven Laufradradius des linken und des rechten Laufrades an der jeweiligen Achse und dem Wert und der Richtung des Lenkwinkels des Lenkrades die Winkelgeschwindigkeit des jeweiligen Laufrades in Echtzeit eingestellt wird, damit die Werte der Lineargeschwindigkeit der koaxialen linken und rechten Räder die Anforderung eines sicheren und stabilen Fahrens des Fahrzeugs, das auf einer geradlinigen Straße oder einer gekrümmten Straße fährt, erfüllen, wobei das Reifenplatzer-Alarmmodul aktiviert wird, um eine Alarmierung nach innen und nach außen auszuführen.

14. System nach einem der Ansprüche 1 bis 13, wobei die Abtastfrequenz des Überwachungsmoduls eine Aktualisierung auf den effektiven Rollradius-Parameter eines Laufrades abschließen kann, solange das Fahrzeug 0,1 bis 0,5 m fährt.

## Revendications

1. Système de conduite sécurisée et de secours pour une modification du rayon de la roue et un éclatement du pneu à haute vitesse comprenant :
un module de contrôle en temps réel permettant de détecter un rayon de roue de roulement et une vitesse angulaire de la roue correspondante ;
un module de transmission de signal permettant de transmettre les signaux détectés du rayon de roue de roulement et de la vitesse angulaire du module de contrôle en temps réel ;
un module d'analyse et de traitement permettant de recevoir les signaux de rayon de roue et les signaux de vitesse angulaire provenant du module de transmission de signaux et d'analyser et de traiter les signaux afin d'obtenir une modification de la hauteur du rayon de roue efficace et une modification de la vitesse angulaire ;
un appareil de commande central permettant de déterminer si oui ou non un éclatement du pneu de roue correspondante s'est produit en fonction de la modification de la hauteur du rayon de roue efficace de la roue correspondante transmise par le module d'analyse et de traitement ; et
un module de commande de freinage de roue, une fois que l'appareil de commande central a déterminé qu'un pneu a éclaté, l'appareil de commande central exécute une instruction de freinage d'urgence et transmet les signaux de rayon de roue efficace et les signaux de vitesse angulaire en temps réel de la roue correspondante au module de commande de freinage de la roue,
**caractérisé en ce que** le module de commande de freinage de la roue peut commander à un dispositif de freinage d'appliquer des forces de freinages ayant des intensités différentes et des temps d'action différents à la roue correspondante, sur la base d'un état dans lequel le véhicule est conduit sur une route en ligne droite ou sur une route présentant un virage en fonction d'une différence entre le rayon de roue efficace de la roue dont le pneu a éclaté et le rayon de roue efficace de la roue dont le pneu n'a pas éclaté, de manière à commander une vitesse de déplacement en temps réel de la roue correspondante, et ainsi le véhicule peut être maintenu dans son état de conduite stable d'origine,
dans lequel, dans l'état d'un véhicule qui circule sur une route en ligne droite, le module de commande de freinage de la roue peut commander au système de freinage de la roue correspondante d'appliquer une force de freinage de manière à ajuster un rapport de la vitesse angulaire de la roue dont le pneu a éclaté et la vitesse angulaire de la roue coaxiale dont le pneu n'a pas éclaté étant une proportion inverse d'un rapport des rayons de roulement efficaces en temps réel de la roue dont le pneu a éclaté et les rayons de roulement efficaces en temps réel de la vitesse angulaire de la roue coaxiale dont le pneu n'a pas éclaté en générant un signal de commande de la force de freinage afin d'augmenter la force de freinage de la roue coaxiale n'ayant pas le pneu éclaté, ce qui permet ainsi de commander aux deux roues avant coaxiales ou aux deux roues arrière coaxiales du véhicule d'atteindre ou de conserver une vitesse linéaire identique ; ou dans l'état du véhicule qui circule sur une route présentant un virage, le module de commande de freinage de la roue peut ajuster la différence entre la vitesse angulaire de la roue dont le pneu a éclaté et la vitesse angulaire de la roue coaxiale dont le pneu n'a pas éclaté sur une différence entre les vitesses linéaires des deux roues coaxiales en fonction de la dimension et de la direction de l'angle de braquage afin de satisfaire à la demande d'angle de braquage du véhicule lorsqu'il circule sur une route présentant un virage.

2. Système selon la revendication 1, dans lequel le dispositif de commande central détermine quel pneu de la roue correspondante a éclaté lorsque la valeur de la modification de la hauteur du rayon de roue efficace Δh est égale à l'amplitude maximale de la modification de la hauteur Δhₘₐₓ du rayon de roue efficace, dans lequel Δhₘₐₓ = Rₘₐₓ-Rₘᵢₙ, Rₘᵢₙ étant le rayon de roulement efficace maximum de la roue prédéterminée lorsque la pression d'air est suffisante, et Rₘᵢₙ est le rayon de roulement efficace minimum de la roue prédéterminée lorsque la pression d'air est égale à zéro absolu ; le dispositif de commande central détermine quel pneu est dans un état de manque d'air ou manque dangereusement d'air lorsque Δh est compris entre 0 et Δhₘₐₓ.

3. Système selon l'une quelconque des revendications 1 à 2, dans lequel le module de contrôle en temps réel pour le rayon de roulement de la roue inclut un ou plusieurs capteur(s) de hauteur qui sont fixés solidement sur l'essieu de la roue correspondante adjacente au moyeu de roue respectif, les capteurs de hauteur peuvent mesurer la valeur de la modification de la hauteur en temps réel entre le moyeu et le sol, depuis l'extérieur du pneu, pendant que le véhicule circule ; dans lequel les capteurs de hauteur incluent des éléments de mesure permettant de mesurer la hauteur entre le moyeu et le sol grâce à des ultrasons, des rayons infrarouges ou un rayon laser.

4. Système selon l'une quelconque des revendications 1 à 3, dans lequel un capteur d'inclinaison latérale agissant comme système d'évaluation auxiliaire peut déterminer quel pneu a éclaté en détectant la valeur de l'inclinaison du véhicule dans la direction de la roue dont le pneu a éclaté ; lorsqu'un pneu a éclaté, on pourra constater une réduction de la hauteur spécifique Δhₘₐₓ du véhicule par rapport au sol dans la position avec le pneu éclaté, et la réduction de la hauteur spécifique Δhₘₐₓ provoquera un angle d'inclinaison spécifique θₘₐₓ du véhicule dans la direction de la roue dont le pneu a éclaté, le plan horizontal du châssis du véhicule maintiendra une condition d'inclinaison stable pendant la conduite avec une roue dont le pneu a éclaté, un jeu de capteurs de la valeur de l'inclinaison latérale monté dans le bas du véhicule pourra aider à évaluer quel pneu a éclaté ou si le rayon de roulement a subi une modification particulière en contrôlant la condition d'inclinaison spécifique.

5. Système selon l'une quelconque des revendications 1 à 4, dans lequel le dispositif de commande central détermine quel pneu a éclaté lorsque la modification de la hauteur du rayon efficace du pneu est égale à la valeur de la modification de la hauteur maximale Δhₘₐₓ du rayon efficace et la valeur de la modification de la hauteur reste inchangée après que le véhicule a dépassé la distance d'action différée prédéterminée, après que le véhicule a dépassé une distance de conduite après que le dispositif de commande central a déterminé quel pneu a éclaté, si le dispositif de commande central détecte que la valeur de la modification de la hauteur du rayon efficace du pneu n'est pas la valeur de la modification de la hauteur maximale Δhₘₐₓ lorsque le pneu a éclaté, mais revient à sa valeur ordinaire stable, il peut déterminer que des signaux de défaut parasites produits du fait de creux ou de bosses locaux anormaux dans une surface de la route et déclenche immédiatement la détermination de l'éclatement d'un pneu.

6. Système selon l'une quelconque des revendications 1 à 3, dans lequel le module de contrôle en temps réel pour le rayon de roulement de la roue est constitué de modules intégrés des fonctions de détection montés sur le moyeu à l'intérieur de chaque pneu, et le module intégré des fonctions de détection inclut au moins un module d'alimentation électrique, des capteurs permettant de détecter la hauteur du profil du pneu et un module d'émission sans fil ; le module intégré des fonctions de détection peut être monté sur une valve de gonflage ou un moyeu ; une valeur de la modification en temps réel du rayon de roulement efficace du pneu peut être déterminée à l'aide d'une valeur de la modification en temps réel d'une distance entre le profil du pneu et le moyeu détectée lorsque le module intégré des fonctions de détection tourne jusqu'à la partie la plus basse ; les capteurs permettant de détecter la hauteur de l'intérieur du profil du pneu peuvent détecter la modification de la hauteur du profil du pneu par communication sans fil, à l'aide d'ultrasons, d'un rayon infrarouge ou d'un rayon laser, ou peuvent mesurer une réduction de la hauteur du profil du pneu lorsque le pneu a éclaté ou manque dangereusement d'air en entrant en contact élastique physique direct avec le profil du pneu à l'aide d'un commutateur électromagnétique de contact, d'un commutateur de proximité ou d'un détecteur de déplacement, et détermine ainsi si un pneu a éclaté ou manque dangereusement d'air et obtient les rayons de roulement efficaces correspondant à l'instant présent ; et le module intégré des fonctions de détection envoie des informations relatives à l'éclatement d'un pneu et des signaux de rayon de roue vers l'extérieur uniquement lorsqu'il détecte que la hauteur du profil du pneu a été réduite à la valeur maximale Δhₘₐₓ.

7. Système selon la revendication 6, dans lequel le module intégré des fonctions de détection permettant de détecter le rayon de roulement efficace de la roue depuis l'intérieur du pneu peut intégrer des capteurs d'accélération, des capteurs de la pression des pneus et des capteurs de la température des pneus.

8. Système selon la revendication 6, dans lequel lorsque la hauteur du profil du pneu a été réduite à la valeur la plus basse, lorsque le pneu éclaté a été déchiré par le moyeu du fait que le véhicule a roulé longtemps, puis se sépare du moyeu, le rayon de roulement correspondant aux signaux en temps réel sera significativement inférieur à la valeur maximale Rₘₐₓ déterminée lorsque la pression du pneu est normale, le module intégré des fonctions de détection utilise un rayon efficace d'un moyeu métallique mesuré pendant le roulement en contact direct avec le sol comme étant le rayon de roulement efficace de l'instant présent.

9. Système selon l'une quelconque des revendications 1 à 8, qui comprend en outre un module d'alarme en cas d'éclatement d'un pneu, et le module d'alarme en cas d'éclatement d'un pneu reçoit les signaux de l'éclatement d'un pneu émis par le dispositif de commande central et active automatiquement la fonction d'alarme à l'intérieur et à l'extérieur du véhicule, et maintient la fonction d'alarme jusqu'à ce que cette fonction d'alarme soit automatiquement annulée après que le véhicule s'est arrêté en toute sécurité ou qu'elle soit annulée manuellement en temps voulu ; les fonctions d'alarme à l'intérieur incluent une annonce vocale, des voyants d'avertissement qui clignotent sur le tableau de bord ; les fonctions d'alarme à l'extérieur incluent l'allumage des feux de brouillard, l'allumage des feux de position, l'allumage des feux stop, l'allumage des feux de route et des feux de croisement, l'émission d'un sifflement ou le déclenchement d'une alarme spécifique, comme l'allumage des feux de position et le clignotement des feux de changement de direction du côté de la zone d'arrêt d'urgence.

10. Système selon l'une quelconque des revendications 1 à 9, qui comprend en outre un module de mesure et de stabilisation de l'angle de braquage des roues, et ce module de mesure et de stabilisation de l'angle de braquage des roues fournit les données relatives à la direction et la valeur en temps réel de l'angle de braquage des roues directrices au dispositif de commande central, et en même temps, le module de mesure et de stabilisation de l'angle de braquage des roues augmente immédiatement automatiquement la résistance des roues directrices ou bloque totalement les roues directrices dans le cas d'un véhicule équipé d'une direction assistée électrique ou d'une direction assistée hydraulique qui reçoit les signaux d'un éclatement d'un pneu émis par le dispositif de commande central ; puis le module de mesure et de stabilisation de l'angle de braquage des roues peut réduire de manière appropriée la résistance lorsqu'il détecte que le chauffeur a l'intention de braquer de telle sorte que le véhicule puisse changer de file en ajustant légèrement la direction.

11. Système selon l'une quelconque des revendications 1 à 10, qui comprend en outre un module de prévention de collision par l'arrière par un véhicule suiveur, qui est communiqué par un signal au dispositif de commande central, le module de prévention de collision par l'arrière par un véhicule suiveur inclut un dispositif de détection de la distance pour détecter, en temps réel, une distance entre ce véhicule et un véhicule le suivant de très près ; lorsque le système détermine quel pneu du véhicule manque dangereusement d'air ou a éclaté, le dispositif de détection de la distance transmet les signaux de distance détectée en temps réel au module de prévention de collision par l'arrière par un véhicule suiveur, et le module de prévention de collision par l'arrière par un véhicule suiveur compare tout d'abord la distance avec un seuil prédéterminé de déclenchement du freinage, et transmet ensuite les signaux de déclenchement du freinage d'urgence du véhicule au dispositif de commande central lorsque la distance est inférieure au seuil de déclenchement du freinage, le dispositif de commande central émet ensuite des signaux de déclenchement du freinage vers le module de commande du freinage et le module de commande de fonctionnement du moteur, dans le but de commander la vitesse du véhicule et de conserver une distance de sécurité entre ce véhicule et le véhicule suiveur inchangée ; lorsque le module de prévention de collision par l'arrière par un véhicule suiveur détecte que la distance entre ce véhicule et le véhicule suiveur raccourcit rapidement, il compare la distance avec un seuil prédéterminé de déclenchement d'accélération, puis il émet les signaux de déclenchement d'accélération vers le dispositif de commande central si la distance est égale ou inférieure au seuil de déclenchement d'accélération, le dispositif de commande central émet ensuite en outre une instruction d'exécution de l'accélération vers le module de commande de fonctionnement du moteur, de telle sorte que la force d'entrainement du moteur augmente et la vitesse augmente donc pendant que la vitesse linéaire d'entrainement des deux roues de l'essieu sur lequel un pneu a éclaté sont maintenues égales par le module de commande du freinage ou la différence de vitesse répond à une exigence pour le véhicule qui circule sur une route présentant un virage, et ainsi une distance de sécurité par rapport au véhicule suiveur augmente de façon active ; lorsque la distance entre les véhicules augmente jusqu'au seuil prédéterminé de déclenchement du freinage, le dispositif de commande central envoie automatiquement une instruction de déclenchement automatique d'accélération vers le module de commande de fonctionnement du moteur ; lorsque le module de prévention de collision par l'arrière par un véhicule suiveur détecte que la distance entre ce véhicule et le véhicule suiveur augmente à nouveau pour devenir supérieure au seuil prédéterminé de déclenchement du freinage, le dispositif de commande central renvoie l'instruction de décélération d'urgence au module de commande du freinage afin de commander la vitesse du véhicule dont le pneu a éclaté jusqu'à ce qu'elle soit réduite à une vitesse prédéterminée de conduite sécurisée en cas d'éclatement d'un pneu.

12. Système selon l'une quelconque des revendications 1 à 11, dans lequel le dispositif de commande central peut commander collectivement le module de commande de freinage de la roue et le module de commande de fonctionnement du moteur, de telle manière que la roue correspondante du véhicule peut être freinée, puis la vitesse angulaire de la roue correspondante peut être ajustée, en même temps, la puissance de sortie appliquée au véhicule par le moteur peut être augmentée ou réduite, et donc le véhicule peut accélérer ou décélérer.

13. Système selon l'une quelconque des revendications 1 à 12, dans lequel, lorsque le dispositif de commande central détermine que les pneus d'un véhicule manquent d'air, de telle sorte que la valeur de la modification de la hauteur Δh du rayon de roue efficace satisfait à la condition suivante : 0 < Δh < 0,6 Δhₘₐₓ, le dispositif de commande central est réglé de telle sorte que, en fonction de la vitesse angulaire en temps réel et de la valeur de la modification en temps réel de la dimension du rayon de roue efficace des roues gauche et droite sur l'essieu respectif, et de la valeur et de la direction de l'angle de braquage des roues directrices, la vitesse angulaire de la roue correspondante est ajustée en temps réel pour que la valeur de la vitesse linéaire des roues gauche et droite coaxiales remplisse l'exigence d'une conduite stable et sûre du véhicule qui circule sur une route en ligne droite ou une route qui fait un virage, et le module d'alarme en cas d'éclatement d'un pneu sera activé pour déclencher l'alarme à l'intérieur et à l'extérieur.

14. Système selon l'une quelconque des revendications 1 à 13, dans lequel la fréquence d'échantillonnage du module de contrôle peut achever une mise à jour d'un paramètre de rayon de roulement efficace d'une roue dans la mesure où le véhicule circule sur 0,1 ∼ 0,5 m.
